(19) Europäisches Patentamt / European Patent Office / Office européen des brevets

(11) **EP 4 383 182 A1**

(12) **EUROPEAN PATENT APPLICATION**
published in accordance with Art. 153(4) EPC

(43) Date of publication:
**12.06.2024 Bulletin 2024/24**

(21) Application number: **22852617.4**

(22) Date of filing: **26.04.2022**

(51) International Patent Classification (IPC):
*G06Q 50/30* *(2012.01)*

(52) Cooperative Patent Classification (CPC):
**G06Q 50/40**

(86) International application number:
**PCT/JP2022/018877**

(87) International publication number:
**WO 2023/013188 (09.02.2023 Gazette 2023/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.08.2021 US 202163228256 P**

(71) Applicant: **Panasonic Intellectual Property Management Co., Ltd.**
**Kadoma-shi, Osaka 571-0057 (JP)**

(72) Inventors:
• **MURAMOTO, Eiichi**
  **Kadoma-shi, Osaka 571-0057 (JP)**
• **KAWAMOTO, Hirokazu**
  **Kadoma-shi, Osaka 571-0057 (JP)**
• **TOJIMA, Masayoshi**
  **Kadoma-shi, Osaka 571-0057 (JP)**

(74) Representative: **Novagraaf International SA**
**Chemin de l'Echo 3**
**1213 Onex, Geneva (CH)**

(54) **INFORMATION PROCESSING METHOD, INFORMATION PROCESSING DEVICE, AND PROGRAM**

(57)     An information processing method according to an aspect of the present disclosure is an information processing method performed by an information processing device. The information processing method includes: acquiring first information indicating an initial value of one or more items to be used for evaluating a service that uses one or more mobile bodies (S210); executing a first simulation using the first information to identify second information including information indicating a first location where an accident involving the one or more mobile bodies can occur and information regarding a mobile body and a person present in surroundings of the first location (S220); calculating, based on the first information, third information that is an indicator of usability of the service and fourth information that is an indicator of economic performance of the service (S230); calculating, based on the second information, fifth information indicating an amount of damage caused in case of the accident (S240); and executing a second simulation using the third information, the fourth information, and the fifth information to retrieve an optimal solution for the one or more items under a predetermined condition (S250).

FIG. 13

```
Start
   ↓
S210  Acquire first information indicating initial value of
      one or more items to be used for service evaluation
   ↓
S220  Perform first simulation using first information to
      identify second information including information
      indicating first location where accident is likely to
      occur and information regarding mobile bodies and
      people present in surroundings of first location
   ↓
S230  Calculate, based on first information,
      third information that is indicator of usability of
      service and fourth information that is indicator of
      economic performance of service
   ↓
S240  Calculate, based on second information,
      fifth information that indicates amount of damage
      caused in case of accident
   ↓
S250  Execute second simulation using third information,
      fourth information, and fifth information to retrieve
      optimal solution for one or more items
   ↓
End
```

**Description**

[Technical Field]

The present disclosure relates to an information processing method, an information processing device, and a program.

[Background Art]

In recent years, along with changes in the environment involving markets as typified by CASE (Connected Autonomous Shared Electric), demand for mobility services is increasing. On the other hand, there are a wide range of elements (service factors) that constitute mobility services. For this reason, it is necessary to design and evaluate mobility services in advance in order to optimize the mobility services. When designing and evaluating mobility services, for example, the usability, the economic performance, the safety, and the like of the mobility services are used as indicators and evaluated. For example, Non Patent Literature (NPL) 1 discloses a method for calculating the amount of damage for an entire road that is an example of an indicator of safety. Also, for example, NPL 2 discloses a method for re-enacting a situation of an accident at a specific curve or intersection of a road. Also, for example, NPL 3 discloses, in order to introduce a ride-sharing service that is an example of a mobility service, a method for analyzing the mobility service in consideration of the usability and the economic performance of the mobility service.

[Citation List]

[Non Patent Literature]

> [NPL 1] The Ministry of Land, Infrastructure, Transport and Tourism, "Cost Benefit Analysis Manual", the Internet (https://www.mlit.go.jp/road/ir/hyouka/plcy/kijun/ben-eki_h30_2. pdf)
> [NPL 2] The Ministry of Land, Infrastructure, Transport and Tourism, "Traffic Accident Prediction Simulation System Verification Manual", the Internet (https://www.jsae.or.jp/tops/topics/1040/1040-1A.pdf)
> [NPL 3] DENSO TECHNICAL REVIEW Vol. 24, 2019, "Simulation Analysis of Autonomous Ride-Sharing Service in City Area"

[Summary of Invention]

[Technical Problem]

However, if, for example, a simulation for calculating a mobility service in consideration of the usability, the economic performance, and the safety of the mobility service is performed by using a method obtained by simply combining the methods disclosed in NPLs 1 to 3, an enormous amount of time is required.

The present disclosure provides an information processing method and the like, with which it is possible to reduce the amount of time required to calculate a mobility service in consideration of the usability, the economic performance, and the safety of the mobility service.

[Solution to Problem]

An information processing method according to an aspect of the present disclosure is an information processing method executed by an information processing device, the information processing method including: acquiring first information indicating an initial value of one or more items to be used for evaluating a service that uses one or more mobile bodies; executing a first simulation using the first information to identify second information including information indicating a first location where an accident involving the one or more mobile bodies can occur and information regarding a mobile body and a person present in surroundings of the first location; calculating, based on the first information, third information that is an indicator of usability of the service and fourth information that is an indicator of economic performance of the service; calculating, based on the second information, fifth information indicating an amount of damage caused in case of the accident; and executing a second simulation using the third information, the fourth information, and the fifth information to retrieve an optimal solution for the one or more items under a predetermined condition.

Also, an information processing device according to an aspect of the present disclosure includes: an acquirer that acquires first information indicating an initial value of one or more items to be used for evaluating a service that uses one or more mobile bodies; a specifier that executes a first simulation by using the first information to identify second information including information indicating a first location where an accident involving the one or more mobile bodies can occur and information regarding a mobile body and a person present in surroundings of the first location; a first calculator that calculates, based on the first information, third information that is an indicator of usability of the service and fourth information that is an indicator of economic performance of the service; a second calculator that calculates, based on the second information, fifth information indicating an amount of damage caused in case of the accident; and a retriever that executes a second simulation by using the third information, the fourth information, and the fifth information to retrieve an optimal solution for the one or more items under a predetermined condition.

Also, a program according to an aspect of the present disclosure is a program for causing a computer to execute an information processing method including: acquiring first information indicating an initial value of one or more items to be used for evaluating a service that uses one or more mobile bodies; executing a first simulation using the first information to identify second information including information indicating a first location where an accident involving the one or more mobile bodies can occur and information regarding a mobile body and a person present in surroundings of the first location; calculating, based on the first information, third information that is an indicator of usability of the service and fourth information that is an indicator of economic performance of the service; calculating, based on the second information, fifth information indicating an amount of damage caused in case of the accident; and executing a second simulation using the third information, the fourth information, and the fifth information to retrieve an optimal solution for the one or more items under a predetermined condition.

General and specific aspects disclosed above may be implemented using a system, a method, an integrated circuit, a computer program, or a non-transitory recording medium such as a computer-readable CD-ROM, or any combination of systems, methods, integrated circuits, computer programs, or non-transitory recording media.

[Advantageous Effects of Invention]

With the information processing method and the like according to the aspects of the present disclosure, it is possible to reduce the amount of time required to calculate a mobility service in consideration of the usability, the economic performance, and the safety of the mobility service.

[Brief Description of Drawings]

[FIG. 1]

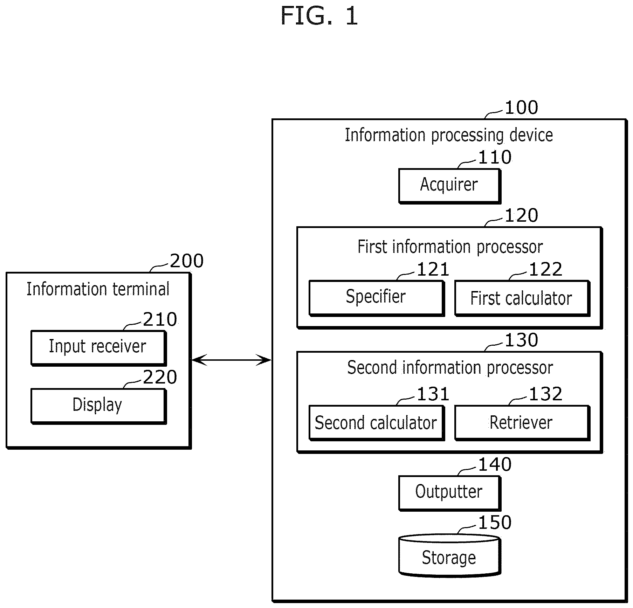

FIG. 1 is a block diagram showing a configuration of an information processing device according to an embodiment.
[FIG. 2]

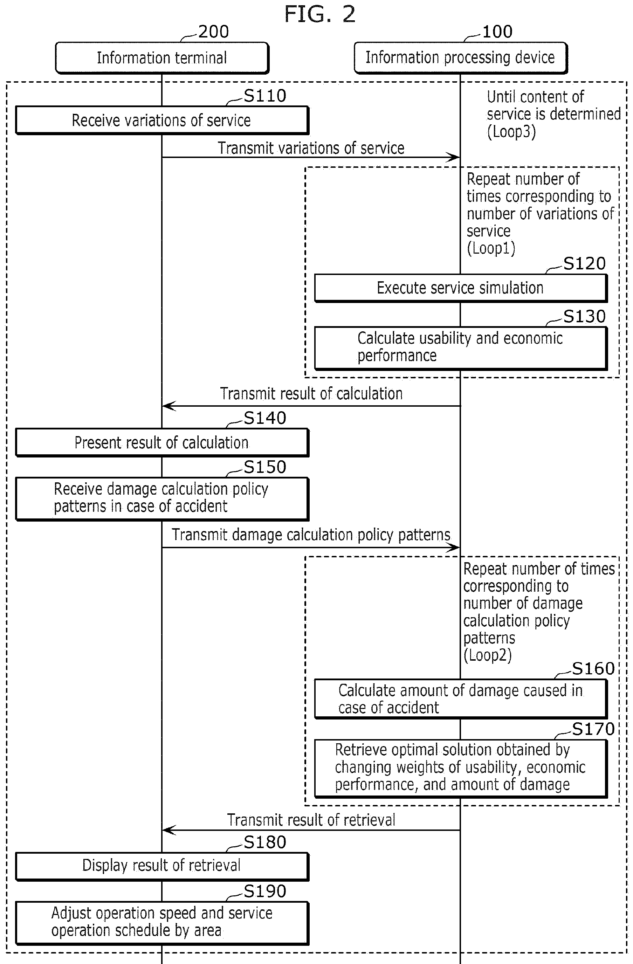

FIG. 2 is a sequence diagram showing a processing procedure performed by an information processing device and an information terminal according to the embodiment.
[FIG. 3]

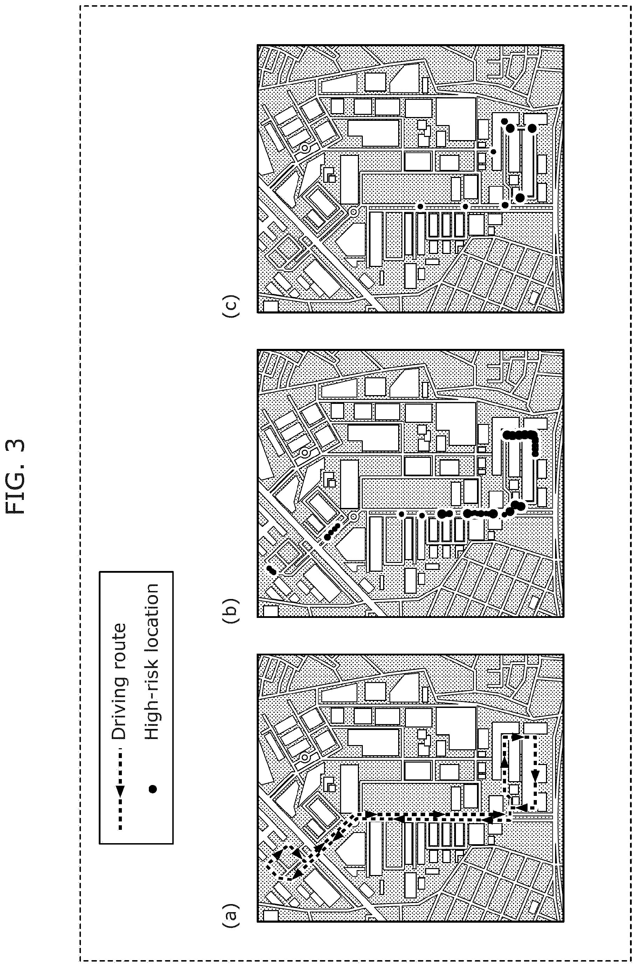

FIG. 3 is a diagram schematically showing high-risk locations in a driving route of a mobile body provided as a mobility service.
[FIG. 4]

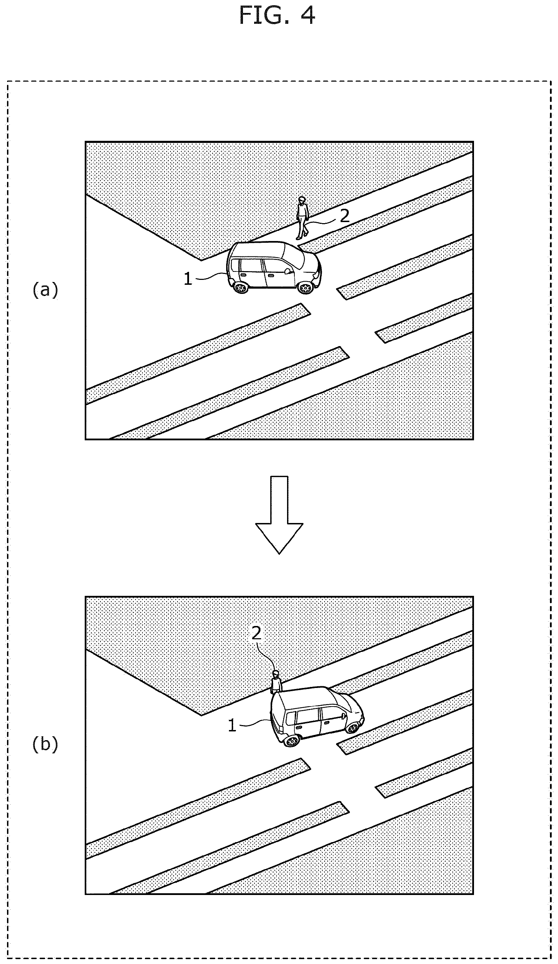

FIG. 4 is a diagram schematically showing a high-risk location in detail.
[FIG. 5]

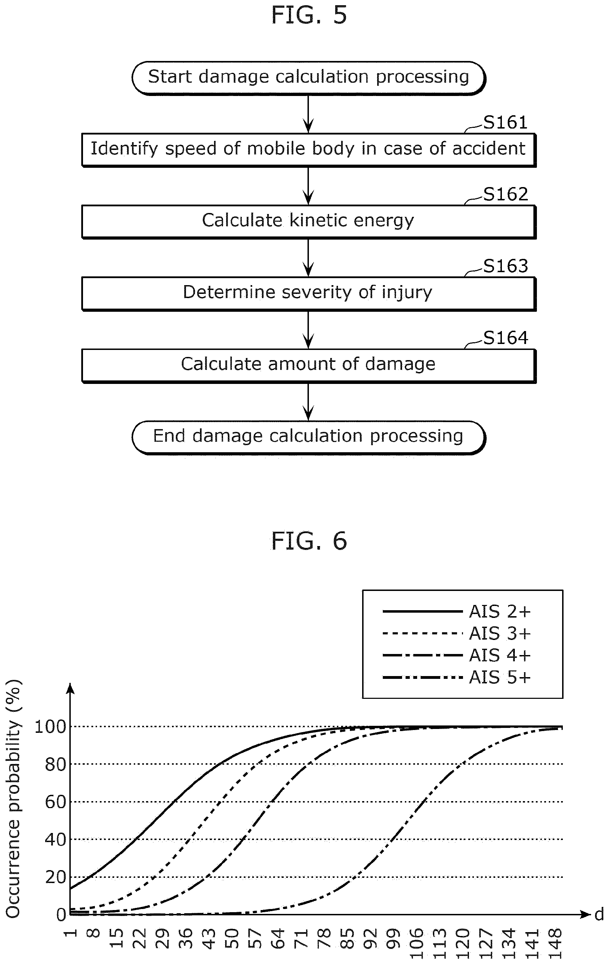

FIG. 5 is a flowchart illustrating damage calculation processing for calculating the amount of damage, executed by the information processing device according to the embodiment.
[FIG. 6]
FIG. 6 is a diagram illustrating an abbreviated injury scale (AIS).
[FIG. 7]

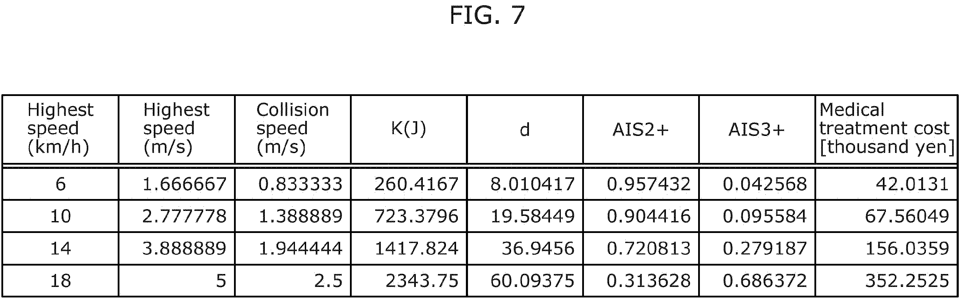

FIG. 7 is a diagram showing an example of results of calculation of the amount of damage.
[FIG. 8]

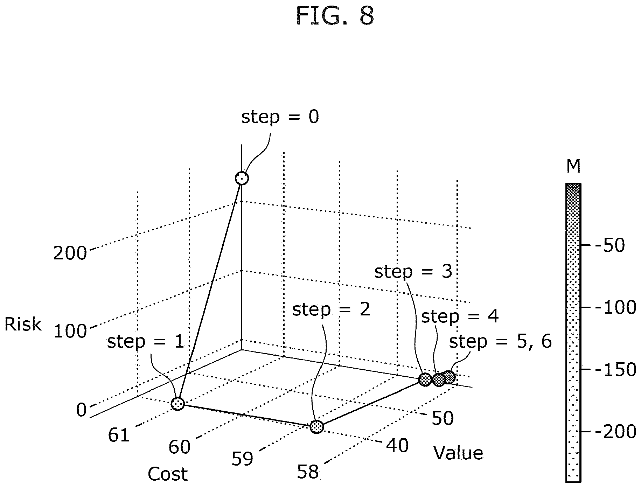

FIG. 8 is a diagram illustrating a first example of optimal solution calculation processing for the mobility service executed by the information processing device according to the embodiment.
[FIG. 9]

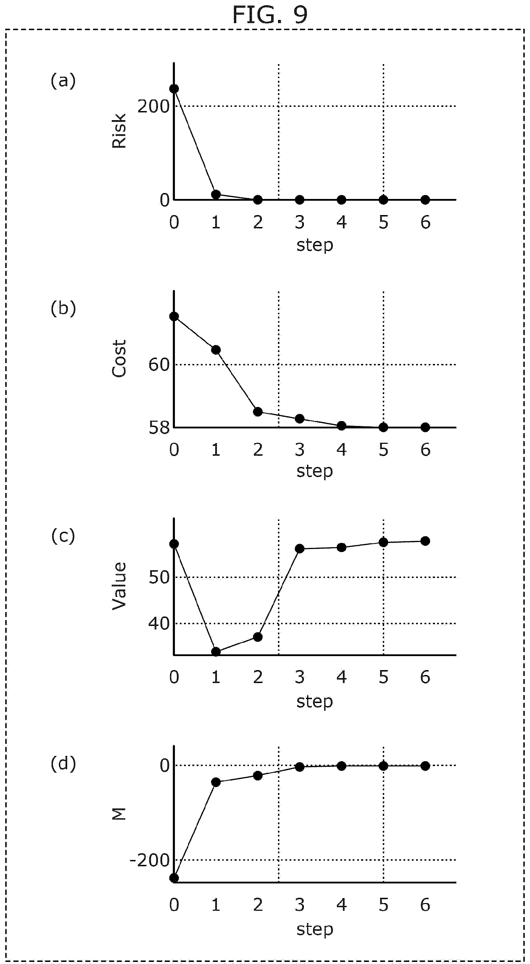

FIG. 9 is a diagram illustrating the first example of optimal solution calculation processing for the mobility service executed by the information processing device according to the embodiment.
[FIG. 10]

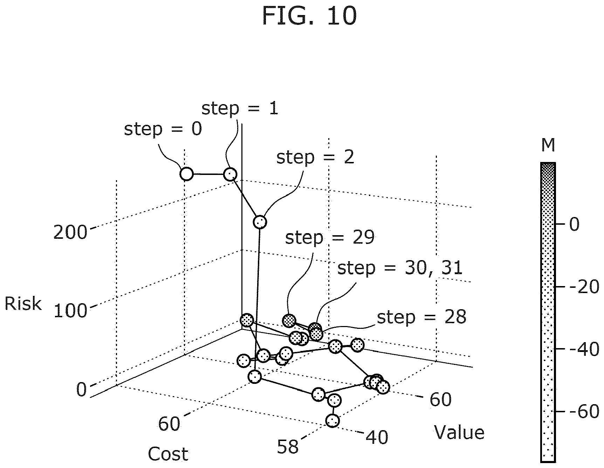

FIG. 10 is a diagram illustrating a second example of optimal solution calculation processing for the mobility service executed by the information processing device according to the embodiment.

[FIG. 11]

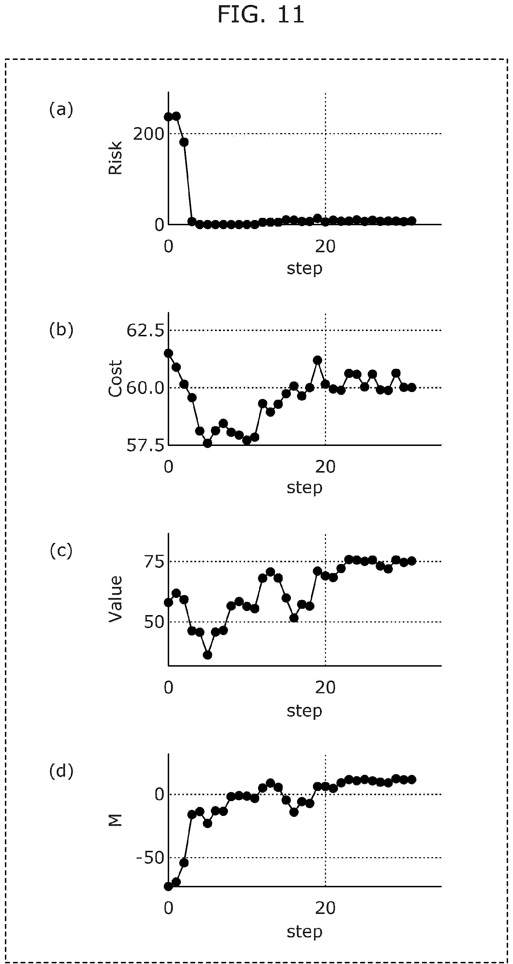

FIG. 11 is a diagram illustrating the second example of optimal solution calculation processing for the mobility service executed by the information processing device according to the embodiment.
[FIG. 12]

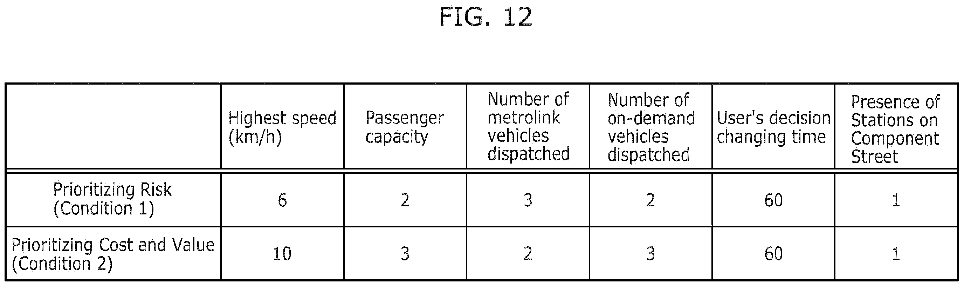

FIG. 12 is a diagram showing an example of results of optimal solution calculation for the mobility service executed by the information processing device according to the embodiment.
[FIG. 13]

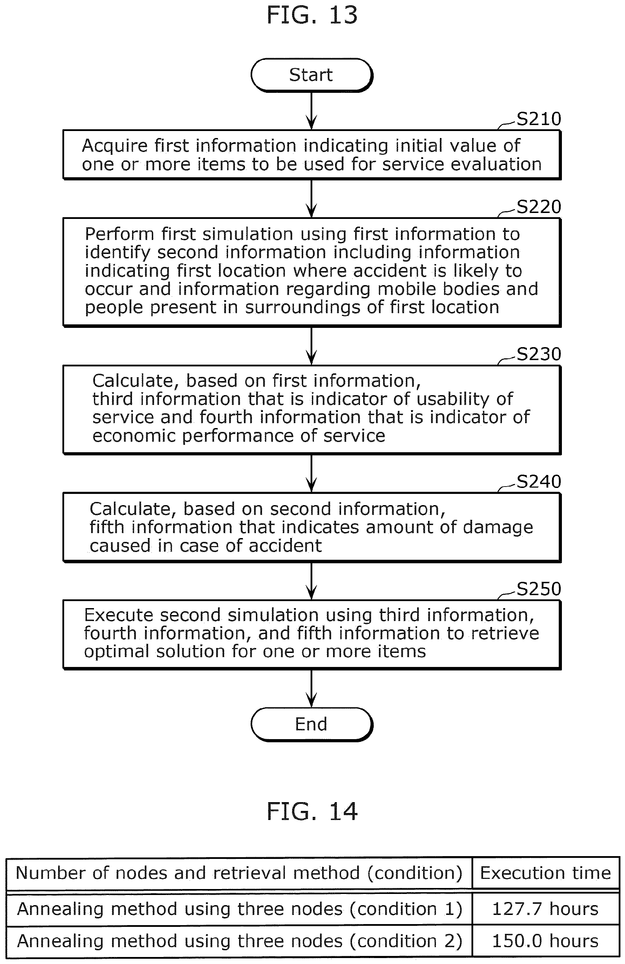

FIG. 13 is a flowchart illustrating a processing procedure performed by the information processing device according to the embodiment.
[FIG. 14]
FIG. 14 is a diagram showing an example of the amount of time required for the information processing device according to the embodiment to perform processing.

[Description of Embodiment]

(Summary of the Present Disclosure)

As described above, when designing and evaluating a mobility service (hereinafter also referred to simply as "service"), for example, the usability, the economic performance, the safety, and the like of the service are evaluated as indicators. As the safety of the service, for example, the amount of damage caused in case of an accident when the mobility service is provided may be used.

For example, in NPL 1, the amount of damage for an entire road is calculated by using accident occurrence probability. However, with the method of NPL 1, it is not possible to predict what kind of accident will occur and where the accident will occur. Also, for example, in NPL 2, a method for re-enacting a situation of an accident at a specific curve or intersection of a road is disclosed. Accordingly, with the method of NPL 2, it is possible to predict what kind of accident will occur at a specific intersection. However, with the method of NPL 2, it is not possible to find out what kind of service is optimal from the viewpoint of usability and economic performance. Also, for example, in NPL 3, a method for calculating an autonomous vehicle dispatch plan is disclosed. Accordingly, with the method of NPL 3, it is possible to find out the number of autonomous vehicles required as mobile bodies provided as the service in consideration of the amount of waiting time for passengers. Also, in NPL 3, analysis is performed on the properties of the service according to the pattern in which passenger demand occurs. However, with the method of NPL 3, it is not possible to predict what kind of accident will occur and where the accident will occur although it may be possible to find out an optimal service in consideration of usability and economic performance.

When calculating (retrieving) an optimal service, it is necessary to recognize what kind of accident will occur and where the accident will occur (more specifically, whether an accident can occur) and take usability and economic performance into consideration.

Here, if, for example, a service with optimal usability, economic performance, and safety is calculated (or in other words, if service content with these indicators being optimized is retrieved) by using a method obtained by simply combining the methods disclosed in NPLs 1 to 3, an enormous amount of time is required. Under the circumstances, the inventors of the present application found that, by separately performing the step of calculating severity (specifically, the amount of damage) of an accident in case of the accident and the step of retrieving an optimal solution for a service by executing a simulation in consideration of usability and economic performance, it is possible to suppress an enormous amount of calculation (processing throughput) required to retrieve the optimal solution, or in other words, it is possible to reduce the amount of time required to calculate the service in consideration of usability, economic performance, and safety.

An information processing method according to an aspect of the present disclosure is an information processing method executed by an information processing device, the information processing method including: acquiring first information indicating an initial value of one or more items to be used for evaluating a service that uses one or more mobile bodies; executing a first simulation using the first information to identify second information including information indicating a first location where an accident involving the one or more mobile bodies can occur and information regarding a mobile body and a person present in surroundings of the first location; calculating, based on the first information, third information that is an indicator of usability of the service and fourth information that is an indicator of economic performance of the service; calculating, based on the second information, fifth information indicating an amount of damage caused in case of the accident; and executing a second simulation using the third information, the fourth information, and the fifth information to retrieve an optimal solution for the one or more items under a predetermined condition.

With this configuration, the third information that is an indicator of usability, the fourth information that is an indicator of economic performance, and the fifth information that indicates the amount of damage are calculated separately. Accordingly, for example, the processing throughput for calculating the third information, the fourth information, and the fifth information can be reduced as compared with that when the third information, the fourth information, and the fifth information are simultaneously calculated by using an enormous amount of information. That is, according to the information processing method of the aspect of the present disclosure, it is possible to reduce the amount of time required to calculate the mobility service in consideration of usability, economic performance, and safety, as compared with that when the mobility service in consideration of usability, economic performance, and safety is calculated by simply combining conventional methods (more specifically, when the amount of damage that may be caused in the mobility service, and the indicator of economic performance and the indicator of usability of the mobility service are calculated).

For example, the fifth information may be calculated by using an abbreviated injury scale (AIS) calculated from kinetic energy of the one or more mobile bodies in case of the accident.

With this configuration, the second information can be appropriately identified.

Also, for example, the kinetic energy may be calculated from an average speed of the one or more mobile bodies when the one or more mobile bodies provide the service.

With this configuration, the average speed of the one or more mobile bodies can be easily calculated, and it is therefore possible to reduce the processing throughput required to identify the second information.

Also, for example, the kinetic energy may be calculated by using a speed of the one or more mobile bodies when the accident occurs.

With this configuration, the second information can be identified with high accuracy.

Also, for example, the information processing method may further include: presenting the first location.

With this configuration, for example, a user that causes a computer to execute the information processing method according to the aspect of the present disclosure can check the first location.

Also, for example, the one or more items may include at least one of a speed of the one or more mobile bodies or an operation schedule of the one or more mobile bodies. The information processing method may include: presenting the first location after retrieving the optimal solution; acquiring sixth information indicating at least one of the speed of the one or more mobile bodies or the operation schedule of the one or more mobile bodies at the first location; and changing the optimal solution by using the sixth information.

With this configuration, the user can change the optimal solution to a more appropriate solution (or in other words, for example, a value that is more suitable for the actual situation in which the service is provided) by confirming the first location and considering at least one of the speed of the one or more mobile bodies or the operation schedule of the one or more mobile bodies.

Also, for example, the presenting of the first location may include: determining a display format from at least one of color, brightness, or mark according to severity of the accident; and presenting the first location in the display format determined.

With this configuration, it is possible to enable the user to easily recognize the first location.

Also, for example, the information processing method may include: determining a display format from at least one of color, brightness, or line thickness according to a speed of the one or more mobile bodies for each of one or more areas included in a driving route of the one or more mobile bodies when the one or more mobile bodies provide the service; and presenting the speed of the one or more mobile bodies for each of the one or more areas in the display format determined.

With this configuration, it is possible to enable the user to easily recognize the speed of the one or more mobile bodies.

Also, for example, the information processing method may further include: acquiring seventh information indicating an accident occurrence location and an accident occurrence frequency obtained by the service being executed by using the optimal solution; correcting, based on the seventh information, the second information corrected; calculating again the fifth information based on the second information corrected based on the seventh information; and executing the second simulation by using the third information, the fourth information, and the fifth information calculated again to retrieve the optimal solution again.

With this configuration, the optimal solution is calculated again by using the information obtained as a result of the mobility service being executed, and it is therefore possible to calculate a more appropriate solution (or in other words, for example, a value that is more suitable for the actual situation in which the service is provided).

Also, an information processing device according to an aspect of the present disclosure includes: an acquirer that acquires first information indicating an initial value of one or more items to be used for evaluating a service that uses one or more mobile bodies; a specifier that executes a first simulation by using the first information to identify second information including information indicating a first location where an accident involving the one or more mobile bodies can occur and information regarding a mobile body and a person present in surroundings of the first location; a first calculator that calculates, based on the first information, third information that is an indicator of usability of the service and fourth information that is an indicator of economic performance of the service; a second calculator that calculates, based on the second information, fifth information indicating an amount of damage caused in case of the accident; and a retriever that executes a second simulation by using the third information, the fourth information, and the fifth information to retrieve an optimal solution for the one or more items under a predetermined condition.

A program according to an aspect of the present disclosure is a program for causing a computer to execute an information processing method including: acquiring first information indicating an initial value of one or more items to be used for evaluating a service that uses one or more mobile bodies; executing a first simulation using the first information to identify second information including information indicating a first location where an accident involving the one or more mobile bodies can occur and information regarding a mobile body and a person present in surroundings of the first location; calculating, based on the first information, third information that is an indicator of usability of the service and fourth information that is an indicator of economic performance of the service; calculating, based on the second information, fifth information indicating an amount of damage caused in case of the accident; and executing a second simulation using the third information, the fourth information, and the fifth information to retrieve an optimal solution for the one or more items under a predetermined condition.

With the information processing device according to the aspect of the present disclosure and the program according to the aspect of the present disclosure, the same advantageous effects as those of the information processing method according to the aspect of the present disclosure can be obtained.

Hereinafter, an embodiment will be described specifically with reference to the drawings. Note that the embodiment described below shows a generic or specific example of the present disclosure. The numerical values, shapes, materials, structural elements, the arrangement and connection of the structural elements, steps, the order of the steps, and the like shown in the following embodiment are merely examples, and therefore are not intended to limit the scope of the present disclosure.

(Embodiment)

[Configuration]

FIG. 1 is a block diagram showing a configuration of information processing device 100 according to an embodiment.

Information processing device 100 is an example of a computer that executes an information processing method according to an aspect of the present disclosure, and is a device that simulates (designs) a service that uses one or more mobile bodies, or in other words, a mobility service, and retrieves (calculates) an optimal solution for the mobility service. Specifically, information processing device 100 determines service content such that the usability, the economic performance, and the safety of the service are improved, and outputs the levels of indicators including an indicator of usability, an indicator of economic performance, and an indicator of safety of the determined service.

The indicator of usability is an indicator that comprehensively indicates, for example, the total number of people that can be transported by the service per day, the total number of deliveries of delivery goods that can be delivered by the service per day, and the like.

The indicator of economic performance (economic rationality) is an indicator that comprehensively indicates, for example, the price and fuel cost of the one or more mobile bodies, service operation cost, and the like.

The indicator of safety is an indicator that comprehensively indicates, for example, the risk of a close encounter between the one or more mobile bodies and an object while the service is in operation, and the like. In the present embodiment, the amount of damage is calculated as the indicator of safety.

Usability, economic performance, and safety may have a trade-off relationship such as, for example, when priority is given to safety, usability and economic performance decrease; when priority is given to economic performance, usability and safety decrease; and when priority is given to usability, economic performance and safety decrease. Information processing device 100 retrieves (calculates) an optimal solution for the service (specifically, an optimal solution for one or more items, which will be described later) such that the indicator of usability, the indicator of economic performance, and the indicator of safety respectively exceed predetermined levels and are improved.

The predetermined levels may be set to any values in advance.

The service includes, for example, a service that delivers delivery goods to customers such as a parcel delivery service or a food delivery service. Also, the service includes, for example, a service that transports people to their destinations.

The one or more mobile bodies used in the service are, for example, vehicles such as automobiles or motorcycles.

The one or more mobile bodies may be mobile bodies other than vehicles such as, for example, autonomous mobile robots. Also, the one or more mobile bodies may be of manual operation type, semi-autonomous operation type, or fully autonomous operation type.

Information processing device 100 is implemented by using, for example, a personal computer, a server device, or the like. In the present embodiment, information processing device 100 is a computer that includes a processor such as a CPU (Central Processing Unit), a communication interface, a memory, and the like. The memory includes a ROM (Read Only Memory) and/or a RAM (Random Access Memory), and the like, and stores programs that are executed by the processor. The communication interface may be implemented by using a connector that is connected to a communication line so as to be capable of performing wired communication with information terminal 200, or may be implemented by using an antenna, a wireless communication circuit, and the like so as to be capable of performing wireless communication with information terminal 200.

In the present embodiment, information processing device 100 acquires at least a portion of information required for information processing device 100 to execute simulations from information terminal 200 by establishing communication with information terminal 200 owned by a user. The user may be, for example, a person who uses information processing device 100 and information terminal 200.

The information may be stored in advance in information processing device 100 (more specifically, storage 150).

Information processing device 100 includes acquirer 110, first information processor 120, second information processor 130, outputter 140, and storage 150.

Acquirer 110 is a processor that acquires first information (input information) that includes various types of parameters used for executing simulations. Specifically, acquirer 110 acquires first information that indicates an initial value of one or more items (evaluation items) to be used for evaluating the service (specifically, the mobility service) that uses one or more mobile bodies.

The first information is information that includes, for example, an initial value of at least one of area information or mobile body information. That is, each of the area information and the mobile body information corresponds to an example of the one or more items. As used herein, the term "one or more items" refers to, for example, specific condition items for providing the service that uses one or more mobile bodies such as the number of mobile bodies included in the one or more mobile bodies and the mobile body speed.

The area information is information regarding a target area in which the service that uses one or more mobile bodies to transport people or deliver delivery goods is executed. The area information includes map data of the target area, data that indicates a driving route of the one or more mobile bodies in the target area, and the like. Also, the area information may include information regarding the amount of traffic and the amount of demand of objects (for example, people or mobile bodies other than the mobile bodies used in the service, and the like) in the target area. As used herein, the term "the amount of demand" refers to the total number of requests for transporting people or delivering delivery goods from users who use the service in the target area. Also, the map data may include, as metadata, data that indicates a driving route on which the one or more mobile bodies can drive, no-driving areas in which the one or more mobile bodies are prohibited from driving, the characteristics of the driving route such as intersections, no-entry areas in which the one or more mobile bodies cannot enter, and the like. In the case where the metadata is not included in the map data, information processing device 100 may generate metadata by executing appropriate image analysis processing on the map data.

Also, acquirer 110 may acquire existing record data indicating the amount of traffic of objects in the target area in the past, prepared by the user in advance.

The mobile body information is information regarding the one or more mobile bodies, and includes data that indicates the type of mobile body, the mobile body speed, the total number of mobile bodies operated in the target area, and the like. That is, the type of mobile body, the mobile body speed, the total number of mobile bodies operated in the target area, and the like are specific examples of the one or more items.

The first information may be used as parameters used for calculating one or more of evaluation indicators including the indicator of safety, the indicator of economic performance, and the indicator of usability according to the item of one or more initial values indicated by the first information, or in other words, one or more items. That is, in the simulations for evaluating the service, an optimal solution is retrieved by using the first information that may relate to one or more of the evaluation indicators including the indicator of safety, the indicator of economic performance, and the indicator of usability, such that the evaluation indicators that may have a trade-off relationship such as the indicator of safety, the indicator of economic performance, and the indicator of usability satisfy a predetermined condition as a whole.

For example, information regarding demand such as people transportation demand (the flow of people) can affect economic performance and safety.

Also, for example, information regarding mobile body operation, such as course (mobile body route), placement of stations where mobile bodies stop for passengers to board, mobile body operation speed, and mobile body operating hours that are specific examples of the one or more items, may affect usability, economic performance, and safety. As described above, for example, the first information includes at least one of mobile body speed or mobile body operation schedule. That is, for example, the one or more items include at least one of the speed of the one or more mobile bodies or the operation schedule of the one or more mobile bodies.

Also, the first information may include the acceleration performance, the deceleration performance, the weight of the one or more mobile bodies, or the like. The first information may include, as another constraint used to evaluate the safety of the service, a communication band used while the service is in operation or the like.

Also, the first information may include, as a variable used to evaluate the economic performance and the usability of the service, the cost per mobile body, the performance of sensors included in the one or more mobile bodies, the failure rate of the one or more mobile bodies, the fuel efficiency of the one or more mobile bodies, or the like. Also, the first information may include the number of personnel involved in the service, the personnel cost, or the like. Also, the first information may include, as another constraint used to evaluate the economic performance and the usability of the service, a communication band used while the service is in operation, a communication plan, or the like.

Also, in the case where the service is a service that delivers delivery goods to customers, the one or more items may include the number of deliveries, the amount of waiting time required from when a customer places an order to when the customer receives the ordered delivery goods, accurate delivery rate that indicates the rate at which delivery goods are accurately delivered to customers, or the like.

In the present embodiment, acquirer 110 acquires information input into input receiver 210 of information terminal 200 by the user, as first information. Specifically, the user inputs various types of parameters to be used for information processing device 100 to execute simulations while looking at an input image displayed on display 220 of information terminal 200. Acquirer 110 thereby acquires the first information input into input receiver 210.

As described above, the one or more items may include, for example, the area in which the one or more mobile bodies are operated, the speed of the one or more mobile bodies, the driving route of the one or more mobile bodies, the number of mobile bodies included in the one or more mobile bodies, and the like. However, the one or more items are not limited thereto, and any items may be set.

Also, acquirer 110 acquires, for example, one or more damage calculation policy patterns (pattern information), each indicating a method for calculating the amount of damage performed by second information processor 130.

First information processor 120 is a processor that identifies second information by executing a first simulation using the first information, and calculates third information and fourth information.

Specifically, first information processor 120 executes, based on the first information acquired by acquirer 110, a simulation of movement of the one or more mobile bodies and a simulation of movement of objects in the target area. More specifically, first information processor 120 simulates a movement of the one or more mobile bodies according to amount of demand and the constraints in the target area by referring to the first information that includes the area information, the mobile body information, and the like. Also, in parallel to the simulation of movement of the one or more mobile bodies, first information processor 120 simulates a movement of one or more objects by referring to the area information. First information processor 120 generates a simulation result as second information. Furthermore, first information processor 120 evaluates the service based on the simulation result. Specifically, first information processor 120 calculates the usability and the economic performance of the service. First information processor 120 includes specifier 121 and first calculator 122.

Specifier 121 is a processor that identifies (calculates) second information by executing the first simulation by using the first information.

The second information is information that includes information (high-risk location information) indicating a first location (high-risk location) where accidents involving mobile bodies can occur and information (object information) regarding a mobile body and a person present in the surroundings of the first location. That is, specifier 121 identifies second information that includes the information indicating a first location where accidents involving mobile bodies can occur and the information regarding a mobile body and a person present in the surroundings of the first location by executing a first simulation using the first information.

First calculator 122 is a processor that calculates third information and fourth information based on the first information.

The third information is an indicator of usability of the service. The third information is, for example, Value, which will be described later.

The fourth information is an indicator of economic performance of the service. The fourth information is, for example, Cost, which will be described later.

First information processor 120 optimizes Value and Cost by, for example, repeatedly performing the processing operation of identifying second information and calculating third information and fourth information while changing the value of the one or more items included in the first information such as the driving route of the one or more mobile bodies as appropriate.

Second information processor 130 is a processor that calculates fifth information based on the second information and retrieves an optimal solution for the one or more items. As used herein, the term "second information" refers to, for example, second information in which Value and Cost have been optimized by first information processor 120. Second information processor 130 includes second calculator 131 and retriever 132.

Second calculator 131 is a processor that calculates fifth information based on the second information.

The fifth information is information that indicates the amount of damage in case of an accident. The fifth information is, for example, Risk, which will be described later.

Retriever 132 is a processor that retrieves an optimal solution for the one or more items in a predetermined condition by executing a second simulation using the third information, the fourth information, and the fifth information. As used herein, the term "third information and fourth information" refers to, for example, Value and Cost that have been optimized by first information processor 120.

As used herein, the term "predetermined condition" refers to, for example, a condition that corresponds to the weights of the usability, the economic performance, and the amount of damage. In the present embodiment, the predetermined condition includes the values of α, β, and γ. Also, the predetermined condition may also include lowest and highest values that each of usability, economic performance, and the amount of damage needs to satisfy. For example, the predetermined condition may be a condition in which Risk, which will be described later, is less than or equal to a first threshold value, Cost, which will be described later, is less than or equal to a second threshold value, and Value, which will be described later, is greater than or equal to a third threshold value . There is not particular limitation on the first threshold value, the second threshold value, and the third threshold value, and the first threshold value, the second threshold value, and the third threshold value may be set to any values. The first threshold value, the second threshold value, and the third threshold value may be acquired from information terminal 200, or may be stored in storage 150.

Second information processor 130 repeats the processing a number of times corresponding to the number of damage calculation policy patterns acquired by acquirer 110, retrieves the fifth information and also optimal solutions calculated by using the third information, the fourth information, and the fifth information, and determines the best optimal solution.

In the present embodiment, retriever 132 calculates optimal solution M by using Equation (1) given below.

$$M = α \times Risk + β \times Cost + γ \times Value \quad (1)$$

In the equation, α, β, and γ are arbitrary numerical values used to weight Risk, Cost, and Value. α and β are negative values, and γ is a positive value. For example, acquirer 110 acquires information (coefficient information) indicating α, β, and γ from information terminal 200.

First information processor 120 and second information processor 130 retrieve the optimal solution for the one or more items such that optimal solution M in Equation (1) given above takes a large value. That is, in Equation (1), the lower the numerical values of Risk and Cost, the better, and the higher the numerical value of Value, the better.

Risk is calculated by using, for example, Equation (2) given below.

[Math. 1]

$$Risk = \sum_{i,j} A(P_j(i)) \quad (2)$$

Pj(i) indicates the number of close encounters between mobile body j and pedestrian i. Specifically, Pj(i) indicates the total number of minor incidents. For example, one accident is counted every 300 minor incidents. Function A() is a function for calculating the amount of damage based on the total number of minor incidents. Risk is calculated by, for example, multiplying the total number of minor incidents by the amount of damage of an accident caused by the minor incidents.

Cost is calculated by using, for example, Equation (3) given below.

[Math. 2]

$$Cost = \sum_{i} C(i) + C_{ope} + C_{env} \quad (3)$$

C(i) indicates depreciation expenses of mobile body j, which is, for example, a vehicle that provides the service. $C_{ope}$ indicates operating expenses required to operate the service (by the day, unit: yen). $C_{env}$ indicates maintenance expenses for the environment in which the service is operated (station cost and installation cost for white center lines, guardrails, and road signs, by the day, unit: yen).

Value is calculated by using, for example, Equation (4) given below.

[Math. 3]

$$Value = \sum_{k} \left\{ r * \left( T_{org}(k) - T_{shorter}(k) \right) + \omega V(k) \right\} \quad (4)$$

$T_{org}(k)$ indicates the amount of time required for person k to arrive at a destination by walking. $T_{shorter}(k)$ indicates the amount of time required for person k to arrive at the destination by taking a mobile body that is a vehicle that provides the service. That is, $T_{org}(k) - T_{shorter}(k)$ is the amount of time saved as a result of person k taking the vehicle that provides the service (sec). r is an arbitrary constant. r may be, for example, man-hour cost of person k or the like. $\omega V(k)$ indicates a monetary amount value (yen) obtained by taking into consideration the man-hour cost of an employee in addition to the amount of time effectively used by the employee doing tasks on the move or the like.

The equations used to calculate usability, economic performance, and safety are not limited to the equations given above.

For example, for calculation of safety, the risk occurrence location of minor incidents (also referred to as "high-risk location") and the occurrence frequency of minor incidents, the risk occurrence location of remote interventions and the frequency of remote interventions, the risk occurrence location of mediations and the frequency of mediations, or the like may be used. Also, for example, for calculation of safety, the number of close encounters with objects within x cm from the entire periphery of the mobile body (where x can be set to an appropriate value), the number of close encounters with objects within x cm from the front of the mobile body, TTC (Time To Collision), or the like may also be used.

For example, Risk may be calculated by using any one of the following: (1) parameters regarding the performance of the mobile body; (2) the functionality of complementing the performance of the mobile body by using any one of remote control, infrastructure, or people; or (3) parameters regarding conditions of the driving environment of the mobile body.

Here, the parameters regarding the performance of the mobile body include items such as, for example, braking accuracy (acceleration, braking reaction or resolution), steering control accuracy (reaction speed or resolution), the vehicle weight of the mobile body, and the vehicle size of the mobile body.

An example of the functionality of complementing the performance of the mobile body by using any one of remote control, infrastructure, or people may be functionality of complement by functional monitoring and parameters that affect the performance of the functionality of complement. Examples of the functionality of complement by functional monitoring and the parameters that affect the performance of the functionality of complement include: the presence or absence of functionality of remotely performing supplementary detection of an image or sensing from the mobile body; functionality of remotely performing emergency operation support and the amount of time required for the functionality to perform emergency operation support (or in other words, the amount of time required for an instruction from a center to arrive at the mobile body); the presence or absence of assist functionality of a remote system; and the like. The assist functionality of the remote system may be, for example, a viewing angle that can be remotely confirmed, the state of the mobile body (speed, route prediction, or sensor failure), or the like.

Another example of the functionality of complementing the performance of the mobile body by using any one of remote control, infrastructure, or people may be functionality/performance of complement by using infrastructure. Specific examples include: information regarding objects approaching from a blind spot of the mobile body or a remote area from the mobile body notified from the driving path; the state of traffic lights; the amount of information (speed, object, direction, prediction route, predicted arrival time, and the like) notified from the driving path; the granularity of information (whether pedestrians, bicycles, automobiles, trucks, and the like can be recognized) notified from the driving path; and the like.

Another example of the functionality of complementing the performance of the mobile body by using any one of remote control, infrastructure, or people may be functionality of complement by people. Examples of the functionality of complement by people include items such as the skill level of monitorers who remotely monitor danger, the skill level of operators who perform remote operations, and the like.

Also, for example, for calculation of economic performance, initial cost required to introduce the service, operational cost for operating the service, revenue obtained by operating the service, or the like may be used. The initial cost may include: the cost for purchasing/preparing mobile bodies; the cost of sensors included in the mobile bodies; infrastructure maintenance cost in the target area; initial verification cost of the service; construction cost for constructing a remote control center that remotely manages the mobile bodies; construction cost for constructing software used to operate the service; and the like. The operational cost may include the fuel cost of the mobile bodies, the number of personnel involved in the service, software operation cost, service maintenance cost, communication cost, the cost of real estate use to operate the service, and the like. The revenue may include usage fees obtained from businesses that use the service, usage fees obtained from individuals that use the service, and the like.

For example, Cost may be calculated by using any one of the following: (1) the cost of sensors and control devices required for the automatic driving performance of the mobile bodies; (2) the cost of remote control, infrastructure systems, and personnel required for managing the mobile bodies; or (3) the cost of the mobile bodies required to enable the service.

Also, for example, in the case where the service is a service that transports users who use the service to their destinations, for calculation of usability, any one of the following may be used: the number of transportations, the amount of waiting time spent by each user; the amount of time saved in transportation to a destination from using the existing means of transportation; the accurate delivery rate that indicates the rate at which the mobile bodies accurately arrive at the destinations; and the like.

For example, Value may be calculated by using the amount of people and goods transported by automatic driving, robots, or the like, the accurate delivery rate, frequency, boarding/unboarding, and loading/unloading. For example, the operation efficiency varies depending on whether the remote operator is a trained operator, and thus Value is changed as the return time of the mobile body is changed due to the remote operation. Also, for example, in the case where the remote operator is a trained operator, the return time of the mobile body can be shortened, and thus usability (efficiency) can be increased. Also, even in the case where the remote operator is an operator with a low skill of remote operation, by using an AI (Artificial Intelligence) assistant, it may be possible to remotely operate the mobile body at the same level as an operator with a high skill of remote operation. These conditions may be taken into consideration to determine Value.

Outputter 140 is a processor that outputs information (specifically, results of calculation and results of retrieval) obtained through calculation performed by first information processor 120 and second information processor 130. Outputter 140 outputs, for example, the fifth information and the optimal solution obtained as a result of retrieval to information terminal 200. Also, for example, outputter 140 outputs the second information, the third information, and the fourth information calculated by first information processor 120 to information terminal 200. The output second information includes, for example, the rate of occurrence of interference between a mobile body and an object in the target area. As used herein, the term "interference between a mobile body and an object" may encompass, for example, a so-called minor incident that is a state in which the mobile body and the object may collide. Also, the term "interference between a mobile body and an object" may also encompass, for example, a state in which, in the case where the object is another mobile body, the mobile body and the other mobile body directly oppose each other, which requires a mediation.

The processors such as acquirer 110, specifier 121, first calculator 122, second calculator 131, retriever 132, and outputter 140 are implemented by the processor or the like that executes a program stored in the memory.

Storage 150 is a storage device that stores information received from information terminal 200 and the like. Storage 150 is implemented by, for example, a HDD (Hard Disk Drive), a flash memory, or the like.

Information terminal 200 is a computer that that can perform communication with information processing device 100, and that receives input from a user and presents information received from information processing device 100 to the user. Information terminal 200 is implemented by using, for example, a portable terminal such as a smartphone or a tablet, or a stationary terminal such as a personal computer.

Information terminal 200 includes input receiver 210 and display 220.

Input receiver 210 receives an operation input from the user. Input receiver 210 is implemented by using a mouse, a keyboard, a touch panel, or the like.

Display 220 is a device that displays information for, for example, the user. Specifically, display 220 displays input images used when the user inputs information, information received from information processing device 100, and the like. Display 220 is implemented by using, for example, a liquid crystal display or the like. In the present embodiment, input receiver 210 and display 220 are implemented by using a touch panel display.

The functionality of information processing device 100 may be provided by information terminal 200 as one of the functionality of information terminal 200. Conversely, the functionality of information terminal 200 may be provided by information processing device 100 as one of the functionality of information processing device 100. That is, information processing device 100 and information terminal 200 may be implemented unitarily as one device (for example, one computer).

The structural elements that constitute information processing device 100 may be provided in a single housing, or may be provided in a dispersed manner. In the case where the structural elements that constitute information processing device 100 are provided in a dispersed manner, the information processing method according to the aspect of the present disclosure may be executed by a plurality of computers.

[Processing Procedure]

<Overall Procedure>

Next, a processing procedure performed by information processing device 100 according to the embodiment will be described.

FIG. 2 is a sequence diagram showing a processing procedure performed by information processing device 100 and information terminal 200 according to the embodiment.

First, pre-setting is performed by a setter person (or in other words, a user) such as a service designer. Specifically, the setter person sets, for example, various types of parameters (variations of the service) used for executing simulations while looking at the input images displayed on display 220 of information terminal 200 (S110). Here, the setter person inputs first information such as information required to set a target area, information required to set the amount of traffic of objects in the target area, and information required to set variables, constraints, and objective functions. The input first information is output to information processing device 100.

Next, information processing device 100 acquires the pre-set information, or in other words, the first information, set by the setter person, and executes a simulation (first simulation) based on the acquired first information (S120). Specifically, information processing device 100 executes the first simulation based on the first information to identify second information such as high-risk location calculation.

Next, information processing device 100 calculates (evaluates) the usability of the service and the economic performance of the service by using the result obtained by executing the first simulation, or in other words, using the second information (S130). Information processing device 100 calculates the usability of the service and the economic performance of the service, or in other words, calculates third information and fourth information by changing the initial value of the one or more items, or in other words, repeatedly executing steps S120 and S130 (executing Loop 1 shown in FIG. 2) a number of times corresponding to the number of variations of the service. The results of calculation (for example, the second information, the third information, and the fourth information) are output to information terminal 200.

Next, information terminal 200 presents the acquired results of calculation (S140).

Next, information terminal 200 receives input of damage calculation policy patterns in case of an accident (S150). The setter person sets various types of parameters used in a simulation for calculating the amount of damage while looking at the results of calculation displayed on, for example, display 220 of information terminal 200. The various types of parameters include, for example damage calculation policy patterns, and information indicating the weights of the usability, the economic performance, and the amount of damage. The information indicating the weights of the usability, the economic performance, and the amount of damage are, for example, the values of $\alpha$, $\beta$, and $\gamma$ described above. Also, here, for example, as the damage calculation policy patterns, the setter person inputs pattern information that indicates damage calculation policy patterns. These input information are output to information processing device 100.

Next, information processing device 100 acquires the information set by the setter person, or in other words, the pattern information, and executes a simulation (second simulation) based on the acquired pattern information, and thereby calculating the amount of damage (S160). Specifically, information processing device 100 calculates, for each high-risk location calculated in step S120, the amount of damage caused by an accident that can occur in the high-risk location, or in other words, fifth information.

Next, information processing device 100 retrieves an optimal solution for the one or more items by using the result obtained by executing the second simulation (S170). Specifically, information processing device 100 retrieves the optimal solution for the one or more items by using the fifth information acquired from the result obtained by executing the second simulation, the third information, the fourth information, and information indicating the weights of usability, economic performance, and the amount of damage. Information processing device 100 retrieves the optimal solution for the one or more items by changing the damage calculation policy patterns, or in other words, repeatedly executing steps S160 and S170 (executing Loop 2 shown in FIG. 2) a number of times corresponding to the number of damage calculation policy patterns. The result of retrieval (specifically, the optimal solution for the one or more items) is output to information terminal 200.

The optimal solution may vary depending on the condition, or may not be limited to one solution. In this case, a plurality of optimal solutions (optimal solution candidates) may be output to information terminal 200.

Next, display 220 displays the result of retrieval received from information processing device 100 (S180).

Next, the setter person adjusts the service content while looking at, for example, the result of retrieval displayed on display 220 of information terminal 200 (S190). For example, the processing in steps S110 to S190 (Loop 3 shown in FIG. 2) is performed again until the service content is determined as a variation of the service based on the content received through adjustment. For example, after retrieving the optimal solution, information processing device 100 presents a first location on information terminal 200, and acquires information (sixth information) that indicates at least one of the speed of the mobile body or the operation schedule of the mobile body in the first location, and changes the optimal solution by using the sixth information. For example, information processing device 100 performs the processing in steps S110 to S170 by using the sixth information as new first information, or in other words, the value of the one or more items, and thereby retrieves a new optimal solution.

With this configuration, the user can change the optimal solution to a more appropriate solution (or in other words, for example, a value that is more suitable for the actual situation in which the service is provided) by confirming the first location and considering at least one of the speed of the mobile body or the operation schedule of the mobile body.

For example, a configuration may be used in which the speed of the mobile body is adjusted for each area that includes the driving route of the mobile body. For example, it is assumed here that, when the speed of the mobile body is changed from 10 km/h to 18 km/h at a certain location, the probability of close encounters between the mobile body and people would be 33 times. It is also assumed, based on the Heinrich's Law, that one accident occurs at this location every 0.32 days. In this case, in order to reduce the accident occurrence probability, for example, measures may be taken to change the speed of the mobile body to 10 km/h. Accordingly, the sixth information may include information that indicates a location (area) and information that indicates the speed of the mobile body at the location. The sixth information may also include information that indicates time such as information that indicates that the speed of the mobile body is set to 10 km/h at 3:00 p.m., and otherwise the speed of the mobile body is set to 18 km/h.

As described above, as a result of the high-risk location information, the usability information, and the like being presented to the user, the user can quantitatively recognize the usability and the safety, and determine the service (for example, mobile body operation).

Also, for example, information processing device 100 may acquire seventh information that indicates an accident occurrence location and an accident occurrence frequency obtained by the mobility service using the optimal solution being executed, and correct the second information corrected based on the seventh information. That is, information processing device 100 may again execute the processing starting from step S160 by using the seventh information that is the information obtained by the mobility service determined based on the calculated optimal solution being executed by the user. For example, information processing device 100 may again retrieve an optimal solution by calculating again fifth information based on the second information corrected based on the seventh information, and executing a second simulation using the fifth information calculated again, the third information, and the fourth information.

With this configuration, an optimal solution is calculated again by using information obtained as a result of the mobility service being executed, and it is therefore possible to calculate a more appropriate solution (or in other words, for example, a value that is more suitable for the actual situation in which the service is provided).

As described above the service content is determined by repeating the processing in steps S110 to S190.

<Calculation Result>

FIG. 3 is a diagram schematically showing high-risk locations (for example, locations where minor incidents can occur) on a driving route of a mobile body provided as a mobility service. Specifically, (a) in FIG. 3 is a diagram schematically showing a driving route of a mobile body, (b) in FIG. 3 is a diagram schematically showing high-risk locations according to a first example, and (c) in FIG. 3 is a diagram schematically showing high-risk locations according to a second example. The first example shows high-risk locations when the mobile body is driven at 10 km/h along the driving route shown in (a) in FIG. 3. The second example shows high-risk locations when the mobile body is driven at 5 km/h along the driving route shown in (a) in FIG. 3.

In the first simulation, people traffic and vehicle traffic are re-enacted to perform parameter search for the speed of vehicle traffic. For example, in a first simulation, search is performed to retrieve information indicating which locations and which speed the mobile body provided as the service should be driven to maximize benefits while the risk is within an acceptable range.

For example, in the case where the first information includes information indicating an instruction for the mobile body to drive at 10 km/h and information indicating an instruction for the mobile body to drive at 5 km/h as variations of the service, information (for example, image information) shown in (b) and (c) in FIG. 3 is output from information processing device 100 as a result of calculation.

As described above, for example, information processing device 100 presents the first location to the user.

When presenting the first location, information processing device 100 may determine a display format from at least one of color, brightness, or mark according to accident severity, and output the information to information terminal 200 such that the first location is shown in the determined display format.

Also, information processing device 100 may determine a display format from at least one of color, brightness, or line thickness according to the speed of the mobile body in each of one or more areas included in the driving route of the mobile body determined when the mobile body provides the service, and output the information to information terminal 200 such that the speed of the mobile body in each of the one or more areas is shown in the determined display format.

With the configurations described above, information important to determine the service such as the speed of the mobile body and the first location can be easily recognized by the user.

FIG. 4 is a diagram schematically showing a high-risk location in detail.

For example, in the case where the information shown in (b) or (c) in FIG. 3 is displayed on display 220 by the setter person, for example, an image such as a speech balloon may be displayed near a black dot showing a high-risk location, the image showing mobile body 1 (automobile in this example) turning left at an intersection and object 2 (person in this example) approaching a crosswalk. The speech balloon shows a close encounter between mobile body 1 and object 2 to an extent to which they come into contact with each other. That is, the form of occurrence of risk regarding the safety of the service in the target area is visualized and displayed on display 220.

The form of occurrence of risk regarding the safety of the service in the target area may be displayed as a still image on display 220, or as a moving image (animation) on display 220.

<Calculation Processing for Calculating Amount of Damage>

FIG. 5 is a flowchart illustrating a procedure of damage calculation processing for calculating the amount of damage according to the embodiment. Specifically, FIG. 5 is a flowchart illustrating a specific example of step S160 shown in FIG. 2.

First, second calculator 131 identifies the speed of the mobile body in case of an accident (S161). For example, second calculator 131 identifies the speed of the mobile body by acquiring the second information.

Next, second calculator 131 calculates the kinetic energy of the mobile body based on the identified speed of the mobile body (S162). Specifically, second calculator 131 calculates the kinetic energy of the mobile body by using Equation (5) given below.

$$K = (1/2) \times m \times v^2 \qquad (5)$$

K indicates the kinetic energy of the mobile body, m indicates the mass of the mobile body, and v indicates the speed of the mobile body. The value of m is acquired from information terminal 200 together with, for example, the first information.

v indicates, for example, the average speed of the mobile body when the mobile body provides the service. That is, the kinetic energy is calculated from, for example, the average speed of the mobile body when the mobile body provides the service. With this configuration, the average speed of the mobile body can be easily calculated, and it is therefore possible to reduce processing throughput for identifying the second information.

Alternatively, v may indicate the speed of the mobile body in case of an accident. That is, the kinetic energy may be calculated by using, for example, the speed of the mobile body in case of an accident. With this configuration, the second information can be identified with high accuracy.

Next, second calculator 131 determines the severity of injury that may be suffered by an object (more specifically, a person) in case of an accident (S163). Specifically, second calculator 131 determines the severity by using Equation (6) given below.

$$d = 0.025 + 1.5 \qquad (6)$$

d is a numerical value that indicates the severity, and is a so-called chest deflection.

Next, second calculator 131 calculates the amount of damage caused in case of an accident (or in other words, the fifth information) based on the calculated severity (S164). Specifically, second calculator 131 calculates the amount of damage by using an abbreviated injury scale (AIS) calculated from the kinetic energy of the mobile body in case of an accident. That is, the fifth information is calculated by using an abbreviated injury scale calculated from the kinetic energy of the mobile body in case of an accident.

FIG. 6 is a diagram illustrating the abbreviated injury scale.

In the graph shown in FIG. 6, the horizontal axis indicates d (or in other words, chest deflection), and the vertical axis indicates accident occurrence probability. Also, the severity (the seriousness of injury) of a person involved in an accident increases in the following order: AIS2+, AIS3+, AIS4+, and AIS5+. For example, AIS2+ indicates minor injuries such as sprains, and AIS3+ indicates moderate injuries such as bone fractures.

Second calculator 131 determines the occurrence probability that corresponds to the calculated d based on the abbreviated injury scale, and calculates the amount of damage by using, for example, Equation (7) given below.

$$Z = AIS3P \times AIS3Z/100 + (100 - AIS3P)*AIS2Z/100 \qquad (7)$$

Z indicates the amount of damage. AIS3P indicates the occurrence probability at AIS3+ shown in FIG. 6. AIS3Z indicates medical treatment cost that may be required to pay for medical treatment of moderate injuries such as bone fractures. Also, AIS2Z indicates medical treatment cost that may be required to pay for medical treatment of minor injuries such as sprains.

The values of AIS2Z and AIS3Z are stored in advance in storage 150 together with, for example, the abbreviated injury scale information, or acquired from information terminal 200.

Equation (7) given above is an equation in the case where AIS2+ and AIS3+ in the abbreviated injury scale are used. One or more of AIS2+, AIS3+, AIS4+, and AIS5+ in the abbreviated injury scale may be arbitrarily selected in any combination. The selection result is acquired from information terminal 200 as, for example, a damage calculation policy pattern.

FIG. 7 is a diagram showing an example of results of calculation of the amount of damage.

Highest speed (unit: km/h or m/s) indicates the highest speed of the mobile body calculated as the second information. Collision speed (unit: m/s) indicates the speed of the mobile body when colliding with an object in case of an accident, calculated as the second information. K (unit: J) indicates the kinetic energy of the mobile body. d indicates severity. AIS2+ indicates the occurrence probability at AIS2+ determined based on the abbreviated injury scale and d. AIS3+ indicates the occurrence probability at AIS3+ determined based on the abbreviated injury scale and d. Medical treatment cost (unit: thousand yen) indicates the cost that may be required to pay for medical treatment in case of an accident in the case where the object is a person, and is the amount of damage in this example.

In the manner described above, in the case where a plurality of highest speeds of the mobile body are calculated as the second information, the medical treatment cost (or in other words, the amount of damage) is calculated for each of the plurality of highest speeds.

As described above, for example, information processing device 100 calculates the amount of damage for each high-risk location, and calculates Risk by multiplying the calculated amount of damage by the total number of minor incidents in each high-risk location.

<Retrieval Result>

FIG. 8 is a diagram illustrating a first example of optimal solution calculation processing for the mobility service executed by information processing device 100 according to the embodiment.

FIG. 8 shows a three-dimensional graph with axes indicating evaluation of the safety of the service (specifically, Risk), evaluation of the economic performance of the service (specifically, Cost), and evaluation of the usability of the service (specifically, Value), respectively. In FIG. 8, a bar that indicates overall rating (M) of the service by color shading is also shown. In the three-dimensional graph, dots are plotted, each indicating the evaluation result of the service for each simulation. That is, it indicates that the simulations were executed in the following order: step 0 → step 1 → ..., and the optimal solution was calculated when the simulation in step 6 was executed. Each dot shown in FIG. 8 indicates evaluations of the safety, the economic performance, and the usability of the service. The shading of each dot indicates the overall rating of the service. The darker the dot, the higher the overall rating of the service.

FIG. 9 is a diagram illustrating the first example of calculation processing for calculating the optimal solution for the mobility service executed by information processing device 100 according to the embodiment. Specifically, FIG. 9 shows graphs showing evaluation results of the service. In each graph, the vertical axis indicates evaluation item, and the horizontal axis indicates the order (of steps) in which a simulation was executed.

(a) in FIG. 9 shows a score that indicates evaluation of the safety (Risk) of the service. It indicates that the lower the score, the higher the safety of the service.

(b) in FIG. 9 shows a score that indicates evaluation of the economic performance (Cost) of the service. It indicates that the lower the score, the higher the economic performance of the service.

(c) in FIG. 9 shows a score that indicates evaluation of the usability (Value) of the service. It indicates that the higher the score, the higher the usability of the service.

(d) in FIG. 9 shows a score that indicates the overall rating (M) of the service. It indicates that the higher the score, the more appropriate the solution.

For example, the information shown in FIGS. 8 and 9 is output from information processing device 100 to information terminal 200 as a result of retrieval.

FIG. 10 is a diagram illustrating a second example of optimal solution calculation processing for the mobility service executed by information processing device 100 according to the embodiment. FIG. 11 is a diagram illustrating the second example of calculation processing for calculating the optimal solution for the mobility service executed by information processing device 100 according to the embodiment. That is, FIGS. 10 and 11 show another example of the simulation results shown in FIGS. 8 and 9.

The first example is a result of retrieval obtained by using Equation (1) given above, where $a = -1$, $\beta = -1$, and $\gamma = 1$, and the second example is a result of retrieval obtained by using Equation (1) given above, where $a = -0.3$, $\beta = -1$, and $\gamma = 1$.

As described above, the weights of the usability, the economic performance, and the safety (the amount of damage) can be changed by changing the values of $\alpha$, $\beta$, and $\gamma$.

FIG. 12 is a diagram showing an example of results of the optimal solution calculation processing for the mobility service executed by information processing device 100 according to the embodiment.

In the table shown in FIG. 12, the top row shows an example of the one or more items included in the first information, for each item of which an optimal solution is calculated by information processing device 100. In this example, a simulation is performed on the service that provides one or more mobile bodies (vehicles) to transport people along the predetermined driving route indicated by (a) shown in FIG. 3.

Highest speed indicates the highest speed of the one or more mobile bodies that move along the predetermined driving route.

Passenger capacity indicates the maximum number of passengers in each of the one or more mobile bodies.

Number of metrolink vehicles dispatched indicates the optimal number of mobile bodies required when the one or more mobile bodies are driven in a circulated manner along the predetermined driving route.

Number of on-demand vehicles dispatched indicates the optimal number of mobile bodies required when the one or more mobile bodies are driven to, for example, pick up and drop off users at their destinations when instructions are acquired from the users.

User's decision changing time indicates a threshold value indicating a difference in time based on which users decide to use the service, the difference in time being a difference between the time at which the user would arrive at his/her destination when the service is used and the time at which the user would arrive at his/her destination when the service is not used.

Presence of Stations on Component Street indicates whether stations are installed in, for example, a center portion of the driving route indicated by (a) shown in FIG. 3. For example, 1 indicates that stations are installed, and 0 indicates that there are no stations installed.

Prioritizing Risk (condition 1) indicates results obtained when calculation is performed to improve, in particular, Risk out of Risk, Cost, and Value, and indicates, for example, the content of the service when the results of calculation and the results of retrieval shown in FIGS. 8 and 9 are obtained (or in other words, the optimal solution for the service in the case of the first example described above).

Prioritizing Value and Cost (condition 2) indicates results obtained when calculation is performed to improve, in particular, Cost and Value out of Risk, Cost, and Value, and indicates, for example, the content of the service when the results of calculation and the results of retrieval shown in FIGS. 10 and 11 are obtained (or in other words, the optimal solution for the service in the case of the second example described above).

These information are also output from information processing device 100 as, for example, a result of retrieval.

information Processing Device>

FIG. 13 is a flowchart illustrating a processing procedure performed by information processing device 100 according to the embodiment.

First, acquirer 110 acquires first information indicating an initial value of one or more items to be used for evaluating a service that uses one or more mobile bodies (S210). Acquirer 110 acquires, for example, various types of parameters input by a user using information terminal 200, as the first information.

Next, specifier 121 executes a first simulation by using the first information to identify second information that includes information indicating a first location where an accident involving the one or more mobile bodies can occur and information regarding a mobile body and a person present in the surroundings of the first location (S220). For example, specifier 121 identifies the second information by executing the first simulation on the movement of the one or more mobile bodies and the movement of objects based on the first information acquired by acquirer 110.

Next, first calculator 122 calculates, based on the first information, third information that is an indicator of usability of the service and fourth information that is an indicator of economic performance of the service (S230).

As a result of steps S220 and S230 being repeatedly executed a number of times corresponding to the number of variations of the service, optimal second information, optimal third information, and optimal fourth information are calculated.

Next, second calculator 131 calculates, based on the second information, fifth information that indicates the amount of damage in case of an accident (S240).

Next, retriever 132 executes a second simulation by using the third information, the fourth information, and the fifth information to retrieve an optimal solution for the one or more items in the predetermined condition (S250). For example, retriever 132 executes the second simulation by using the information indicating the values of $\alpha$, $\beta$, and $\gamma$ described above acquired by acquirer 110 as the predetermined condition, the third information, the fourth information, and the fifth information to retrieve the optimal solution for the one or more items.

As a result of steps S240 and S250 being repeatedly executed a number of times corresponding to the number of damage calculation patterns, optimal fifth information and an optimal solution are calculated.

The calculated optimal solution is output to information terminal 200, and the user confirms the optimal solution and then inputs, for example, new first information into information terminal 200. Information processing device 100 acquires the new first information input into information terminal 200, and executes steps S210 to S250 based on the acquired first information.

(Conclusion)

As described above, the information processing method according to the embodiment of the present disclosure is an information processing method executed by an information processing device, the information processing method including: acquiring first information indicating an initial value of one or more items to be used for evaluating a service that uses one or more mobile bodies (S210); executing a first simulation using the first information to identify second information including information indicating a first location where an accident involving the one or more mobile bodies can occur and information regarding a mobile body and a person present in surroundings of the first location (S220); calculating, based on the first information, third information that is an indicator of usability of the service and fourth information that is an indicator of economic performance of the service (S230); calculating, based on the second information, fifth information indicating an amount of damage caused in case of the accident (S240); and executing a second simulation using the third information, the fourth information, and the fifth information to retrieve an optimal solution for the one or more items under a predetermined condition (S250). Specifically, the information processing method according to the embodiment is an information processing method for evaluating a mobility service, the information processing method including the steps of quantifying a degree of damage from accident severity to quantitatively express what kind of accident will occur; and repeatedly executing a simulation by changing parameters regarding usability, economic performance, and re-enacting people traffic and vehicle traffic including where an accident will occur to retrieve an optimal solution, wherein the optimal solution is retrieved by using the simulation. Specifically, the step of calculating the amount of damage from the severity in case of an accident and the step of executing the simulation in consideration of the usability and the economic performance to retrieve the optimal solution are executed separately.

FIG. 14 is a diagram showing an example of the amount of time required for information processing device 100 according to the embodiment to perform processing. In other words, FIG. 14 is a diagram showing an example of calculation time required to retrieve an optimal solution by using the information processing method according to the embodiment. Specifically, in the table shown in FIG. 14, the upper row shows execution time (calculation time) required to retrieve an optimal solution by using an annealing method in three nodes (specifically, three information processing devices 100) to calculate condition 1 described above. In the table shown in FIG. 14, the lower row shows execution time required to retrieve an optimal solution by using an annealing method in the three nodes to calculate condition 2 described above.

In either condition, the execution time is 120 to 150 hours, which are values that can be practically calculated. As described above, according to the information processing method of the embodiment, the third information that is an indicator of usability, the fourth information that is an indicator of economic performance, and the fifth information that indicates the amount of damage are calculated separately. As a result, for example, processing throughput for calculating the third information, the fourth information, and the fifth information can be reduced as compared with the case where the third information, the fourth information, and the fifth information are simultaneously calculated by using an enormous amount of information. That is, with the information processing method according to the aspect of the present disclosure, it is possible to reduce the amount of time required to calculate the mobility service in consideration of usability, economic performance, and safety, as compared with the case where the calculation of the mobility service in consideration of usability, economic performance, and safety is performed by simply combining conventional methods (more specifically, in the case where the amount of damage that may be caused in the mobility service, the indicator of economic performance, and the indicator of usability in the mobility service are calculated).

(Other Embodiments)

Up to here, the information processing method and information processing device 100 according to one or more aspects of the present disclosure have been described by way of an embodiment, but the present disclosure is not limited to the embodiment given above. Other embodiments obtained by making various modifications that can be conceived by a person having ordinary skill in the art to the above embodiment as well as embodiments constructed by combining structural elements of different embodiments without departing from the scope of the present disclosure may also be included within the scope of the one or more aspects of the present disclosure.

For example, outputter 140 may change the content of output according to the destination to which the evaluation of the service is presented.

Also, for example, the amount of benefits insurance pays for the mobility service may be calculated according to the amount of damage calculated during the process of the information processing method of the present application. For example, before operation of the mobility service, a simulation may be performed based on the people traffic and the vehicle traffic re-enacted based on a result of investigation of the amount of traffic, and then the amount of benefits insurance pays for the number of vehicles and the number of operating hours may be calculated based on the amount of damage calculated by the simulation. When the operation of the mobility service is started, each time the actual occurrence frequency of minor incidents fluctuates, the amount of damage may be calculated based on the actual occurrence frequency, and the amount of benefits insurance pays for the number of vehicles and the number of operating hours may be calculated again based on the amount of damage calculated.

Also, for example, information processing device 100 is constructed as a dedicated system for each type of service, but the present disclosure is not limited thereto. For example, information processing device 100 may be constructed as a general-purpose system with which the type of service can be selected as part of constraints. In this case, information processing device 100 operates according to the type of service selected by a user. Specifically, in the case where the user wants to use a transportation service for transporting the user to his/her destination, the user selects the transportation service as the type of service. In this case, information processing device 100 operates as a system that outputs evaluation information for the transportation service for transporting the user to his/her destination.

Also, the present disclosure can be implemented as a program for causing a processor to execute the steps of the information processing method. Furthermore, the present disclosure can be implemented as a computer-readable non-transitory recording medium such as a CD-ROM in which the program is recorded.

For example, in the case where the present disclosure is implemented as the program (software), the steps of the information processing method are executed as a result of the program being executed by using hardware resources such as a CPU, a memory, an input/output circuit, and the like of the computer. That is, the steps of the information processing method are executed as a result of the CPU acquiring data from the memory, the input/output circuit, or the like to perform computation, and outputting the result of computation to the memory, the input/output circuit, or the like.

Also, in the embodiment described above, the structural elements included in information processing device 100 may be configured by using dedicated hardware, or may be implemented by executing a software program suitable for the structural elements. The structural elements may be implemented by a program executor such as a CPU or a processor reading and executing a software program recorded in a recording medium such as a hard disk or a semiconductor memory.

Some or all of the functionality of information processing device 100 according to the embodiment given above may be typically realized as LSIs, which are integrated circuits. These may be individual single chips, or some or all of these may be configured in a single chip. Also, implementation of an integrated circuit is not limited to an LSI, and may be realized by a dedicated circuit or a general-purpose processor. It is also possible to use an FPGA (Field Programmable Gate Array) that can be programmed after LSI production or a reconfigurable processor that enables reconfiguration of the connection and setting of circuit cells in the LSI.

Furthermore, variations obtained by making various modifications that can be conceived by a person having ordinary skill in the art to the above embodiment of the present disclosure without departing from the scope of the present disclosure may also be included within the scope of the present disclosure.

[Industrial Applicability]

The present disclosure is applicable to a system that provides a mobility service.

[Reference Signs List]

1     mobile body
2     object
100   information processing device
110   acquirer
120   first information processor
121   specifier
122   first calculator
130   second information processor
131   second calculator
132   retriever
140   outputter
150   storage
200   information terminal
210   input receiver
220   display

**Claims**

1. An information processing method executed by an information processing device, the information processing method comprising:

   acquiring first information indicating an initial value of one or more items to be used for evaluating a service that uses one or more mobile bodies;

   executing a first simulation using the first information to identify second information including information indicating a first location where an accident involving the one or more mobile bodies can occur and information regarding a mobile body and a person present in surroundings of the first location;

   calculating, based on the first information, third information that is an indicator of usability of the service and fourth information that is an indicator of economic performance of the service;

   calculating, based on the second information, fifth information indicating an amount of damage caused in case of the accident; and

   executing a second simulation using the third information, the fourth information, and the fifth information to retrieve an optimal solution for the one or more items under a predetermined condition.

2. The information processing method according to claim 1,
   wherein the fifth information is calculated by using an abbreviated injury scale (AIS) calculated from kinetic energy of the one or more mobile bodies in case of the accident.

3. The information processing method according to claim 2,
   wherein the kinetic energy is calculated from an average speed of the one or more mobile bodies when the one or more mobile bodies provide the service.

4. The information processing method according to claim 2,
   wherein the kinetic energy is calculated by using a speed of the one or more mobile bodies when the accident occurs.

5. The information processing method according to claim 1, further comprising:
   presenting the first location.

6. The information processing method according to claim 5,

   wherein the one or more items include at least one of a speed of the one or more mobile bodies or an operation schedule of the one or more mobile bodies, and
   the information processing method comprises:

   presenting the first location after retrieving the optimal solution;
   acquiring sixth information indicating at least one of the speed of the one or more mobile bodies or the operation schedule of the one or more mobile bodies at the first location; and
   changing the optimal solution by using the sixth information.

7. The information processing method according to claim 5,
   wherein the presenting of the first location includes:

   determining a display format from at least one of color, brightness, or mark according to severity of the accident; and
   presenting the first location in the display format determined.

8. The information processing method according to claim 5, comprising:

   determining a display format from at least one of color, brightness, or line thickness according to a speed of the one or more mobile bodies for each of one or more areas included in a driving route of the one or more mobile bodies when the one or more mobile bodies provide the service; and
   presenting the speed of the one or more mobile bodies for each of the one or more areas in the display format determined.

9. The information processing method according to any one of claims 1 to 8, further comprising:

acquiring seventh information indicating an accident occurrence location and an accident occurrence frequency obtained by the service being executed by using the optimal solution;

correcting, based on the seventh information, the second information corrected;

calculating again the fifth information based on the second information corrected based on the seventh information; and

executing the second simulation by using the third information, the fourth information, and the fifth information calculated again to retrieve the optimal solution again.

**10.** An information processing device comprising:

an acquirer that acquires first information indicating an initial value of one or more items to be used for evaluating a service that uses one or more mobile bodies;

a specifier that executes a first simulation by using the first information to identify second information including information indicating a first location where an accident involving the one or more mobile bodies can occur and information regarding a mobile body and a person present in surroundings of the first location;

a first calculator that calculates, based on the first information, third information that is an indicator of usability of the service and fourth information that is an indicator of economic performance of the service;

a second calculator that calculates, based on the second information, fifth information indicating an amount of damage caused in case of the accident; and

a retriever that executes a second simulation by using the third information, the fourth information, and the fifth information to retrieve an optimal solution for the one or more items under a predetermined condition.

**11.** A program for causing a computer to execute an information processing method comprising:

acquiring first information indicating an initial value of one or more items to be used for evaluating a service that uses one or more mobile bodies;

executing a first simulation using the first information to identify second information including information indicating a first location where an accident involving the one or more mobile bodies can occur and information regarding a mobile body and a person present in surroundings of the first location;

calculating, based on the first information, third information that is an indicator of usability of the service and fourth information that is an indicator of economic performance of the service;

calculating, based on the second information, fifth information indicating an amount of damage caused in case of the accident; and

executing a second simulation using the third information, the fourth information, and the fifth information to retrieve an optimal solution for the one or more items under a predetermined condition.

FIG. 1

## FIG. 2

```
        ┌─200                              ┌─100
  ┌─────────────────────┐        ┌──────────────────────────────┐
  │ Information terminal │        │ Information processing device │
  └─────────────────────┘        └──────────────────────────────┘
```

┌─S110
Receive variations of service

Until content of
service is determined
(Loop3)

Transmit variations of service →

Repeat number of
times corresponding to
number of variations of
service
(Loop1)
┌─S120
Execute service simulation

┌─S130
Calculate usability and economic
performance

← Transmit result of calculation

┌─S140
Present result of calculation

┌─S150
Receive damage calculation policy
patterns in case of accident

Transmit damage calculation policy patterns →

Repeat number of times
corresponding to
number of damage
calculation policy
patterns
(Loop2)
┌─S160
Calculate amount of damage caused in
case of accident

┌─S170
Retrieve optimal solution obtained by
changing weights of usability, economic
performance, and amount of damage

← Transmit result of retrieval

┌─S180
Display result of retrieval

┌─S190
Adjust operation speed and service
operation schedule by area

# FIG. 3

Legend:
- ----◄---- Driving route
- ● High-risk location

(a)

(b)

(c)

EP 4 383 182 A1

# FIG. 4

(a)

(b)

# FIG. 5

```
┌─────────────────────────────────────────┐
│   Start damage calculation processing    │
└─────────────────────────────────────────┘
                     │
                     ▼                          ⟋S161
┌─────────────────────────────────────────┐
│ Identify speed of mobile body in case of accident │
└─────────────────────────────────────────┘
                     │
                     ▼                          ⟋S162
┌─────────────────────────────────────────┐
│          Calculate kinetic energy         │
└─────────────────────────────────────────┘
                     │
                     ▼                          ⟋S163
┌─────────────────────────────────────────┐
│        Determine severity of injury       │
└─────────────────────────────────────────┘
                     │
                     ▼                          ⟋S164
┌─────────────────────────────────────────┐
│         Calculate amount of damage        │
└─────────────────────────────────────────┘
                     │
                     ▼
┌─────────────────────────────────────────┐
│    End damage calculation processing      │
└─────────────────────────────────────────┘
```

# FIG. 6

Legend:
- —— AIS 2+
- ------ AIS 3+
- —·—·— AIS 4+
- —··—··— AIS 5+

Y-axis: Occurrence probability (%)
X-axis: d

FIG. 7

| Highest speed (km/h) | Highest speed (m/s) | Collision speed (m/s) | K(J) | d | AIS2+ | AIS3+ | Medical treatment cost [thousand yen] |
|---|---|---|---|---|---|---|---|
| 6 | 1.666667 | 0.833333 | 260.4167 | 8.010417 | 0.957432 | 0.042568 | 42.0131 |
| 10 | 2.777778 | 1.388889 | 723.3796 | 19.58449 | 0.904416 | 0.095584 | 67.56049 |
| 14 | 3.888889 | 1.944444 | 1417.824 | 36.9456 | 0.720813 | 0.279187 | 156.0359 |
| 18 | 5 | 2.5 | 2343.75 | 60.09375 | 0.313628 | 0.686372 | 352.2525 |

FIG. 8

## FIG. 9

FIG. 10

# FIG. 11

(a)

(b)

(c)

(d)

FIG. 12

| | Highest speed (km/h) | Passenger capacity | Number of metrolink vehicles dispatched | Number of on-demand vehicles dispatched | User's decision changing time | Presence of Stations on Component Street |
|---|---|---|---|---|---|---|
| Prioritizing Risk (Condition 1) | 6 | 2 | 3 | 2 | 60 | 1 |
| Prioritizing Cost and Value (Condition 2) | 10 | 3 | 2 | 3 | 60 | 1 |

EP 4 383 182 A1

# FIG. 13

Start

↓ S210

Acquire first information indicating initial value of one or more items to be used for service evaluation

↓ S220

Perform first simulation using first information to identify second information including information indicating first location where accident is likely to occur and information regarding mobile bodies and people present in surroundings of first location

↓ S230

Calculate, based on first information, third information that is indicator of usability of service and fourth information that is indicator of economic performance of service

↓ S240

Calculate, based on second information, fifth information that indicates amount of damage caused in case of accident

↓ S250

Execute second simulation using third information, fourth information, and fifth information to retrieve optimal solution for one or more items

↓

End

# FIG. 14

| Number of nodes and retrieval method (condition) | Execution time |
|---|---|
| Annealing method using three nodes (condition 1) | 127.7 hours |
| Annealing method using three nodes (condition 2) | 150.0 hours |

## INTERNATIONAL SEARCH REPORT

| International application No. |
|---|
| **PCT/JP2022/018877** |

**A.  CLASSIFICATION OF SUBJECT MATTER**

*G06Q 50/30*(2012.01)i
FI:   G06Q50/30

According to International Patent Classification (IPC) or to both national classification and IPC

**B.   FIELDS SEARCHED**

Minimum documentation searched (classification system followed by classification symbols)

G06Q50/30

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
|---|---|---|
| P, X | 河本弘和, デジタルによるモビリティサービスの設計, [online], November 2021, Internet <URL:https://holdings.panasonic/jp/corporate/technology/technology-journal/pdf/v6702/p0105.pdf>, [retrieved on 13 July 2022], (KAWAMOTO, Hirokazu. Digitalization for the Design of a Mobility Service.) entire text, all drawings | 1, 10, 11 |
| A | 高橋絢也, 安全・快適で高効率な移動・輸送を実現するモビリティ制御技術, [online], 29 March 2021, Internet <URL:https://www.hitachihyoron.com/jp/archive/2020s/2021/02/pdf/02b07.pdf>, [retrieved on 13 July 2022], non-official translation (TAKAHASHI, Junya. Mobility control technology that realizes safe, comfortable and highly efficient movement and transportation.) entire text, all drawings | 1-11 |
| A | Design for next-generation mobility service in suburban areas [online]. December 2020, Internet <URL:https://www.wpi-aimr.tohoku.ac.jp/cmsoi/g-RIPS_old/PDFs/ProjectDescription_TOYOTA_20201214.pdf>, [retrieved on 13 July 2022] entire text, all drawings | 1-11 |

☐ Further documents are listed in the continuation of Box C.   ☐ See patent family annex.

| | |
|---|---|
| *    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **13 July 2022** | **26 July 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Simulation Analysis of Autonomous Ride-Sharing Service in City Area. *DENSO TECHNICAL REVIEW,* 2019, vol. 24